# EUROPEAN PATENT APPLICATION

(11) **EP 0 787 782 A2**
(43) Date of publication of application: **06.08.1997**
(21) Application number: 97200221.6
(22) Date of filing: 28.01.1997
(51) Int. Cl.: C09K 19/38, C08G 63/668

(54) **Process and materials for highly transparent polymer dispersed liquid crystals**

(30) Priority: 05.02.1996 IT MI960202
(71) Applicant: Sniaricerche S.C.P.A., I-75010 Pisticci Scalo (IT)
(72) Inventor: Huang, Ziqiang, Yantai YTETDZ, Shandong 264006 (CN); Chidichimo, Guiseppe, 87036 Arcavacata di Rende (CS) (IT); Hakemi, Hassan-Ali, 20035 Lissone (MI) (IT); Santangelo, Michele, 75019 Tricarico (MT) (IT)
(74) Representative: Smulders, Theodorus A.H.J., Ir.

(57) **Abstract**

The present invention relates to a process for making a polymer dispersed liquid crystal material comprising: (a) mixing a liquid crystal material with an oligomer; (b) partially curing the resulting mixture of step (a); (c) thermally inducing phase separation of the resulting mixture of step (b); and (d) post curing the resulting polymer dispersed liquid crystal matrix of step (c), to complete phase separation.

## Description

### FIELD OF THE INVENTION

The present invention relates to highly transparent polymer dispersed liquid crystals (PDLC's). The invention also relates to a method for making highly transparent polymer dispersed liquid crystal films having appropriate indices of refraction. The present invention also relates to methods of manufacturing highly transparent polymer dispersed liquid crystal films which prevent optical inhomogeneity between the liquid crystals and the polymer matrix. The process of the present invention also produces PDLC products having significantly reduced light scattering. The highly transparent PDLC materials of the instant invention use single fluid polyester oligomers. The oligomers used to make the PDLC products are oligoesters derived from aromatic polycarboxylic acids or anhydrides, unsaturated polycarboxylic acids or anhydrides and polyols.

### BACKGROUND OF THE INVENTION

Polymer dispersed liquid crystal technology emerged about ten years ago (see U.S. Patent No. 4,435,047 to Fergason; U.S. Patent No. 4,688,900 to Doane et al., and Doane et al., App. Phys. Lett., 48, 269 (1986)) and created great interest because of their potentially useful electrooptical properties and their ease of manufacturing. Contemplated uses of PDLC technology include displays, switchable windows, light modulators and other type of devices to control light transmission. However, the properties of PDLC are very sensitive to the starting materials used for their preparation as well as the manufacturing conditions (see P.S. Drzaic, Appl. Phys., 60, 2142 (1986); N.A.P. Vaz et al., Mol. Cryst. Liq. Cryst., 146, 1 (1987a); A. Fug et al Appl. Phys., 66, 5278 (1989); S. Tahama et al., Mol. Cryst. Liq. Cryst., 8, 99 (1992); P.S. Drzaic et al., Liq. Cryst., 5, 1467 (1989)). More work is still required to investigate the best procedures and starting materials required to optimize the electrooptical response in terms of light transparency, operational voltage, response time, etc. The mechanisms of phase separation or encapsulation which are used to produce PDLC films are quite complex and many factors must be taken into account to get final materials suitable for practical applications. The light transmissibility of the films in the "on" state is one of the critical factors for PDLC applications and several research groups have investigated this factor (see B.G. Wu et al, Appl. Phys., 62, 3925 (1987); S. Zumer, Phys. Rev., 37, 4006 (1988); P. Nolan et al., Liq. Cryst., 14, 339 (1993); R.S. Stein et al., Proc., SPIE-Int. Soc. Opt. Eng., 1911, 132 (1993); S.C. Jain et al, Mol. Cryst. Liq. Cryst., 188, 251 (1990)). However, with current state of the art materials, transmissibilities below 85% have been obtained for very small collective angles (visual direction almost perpendicular to the plane of the film). Recently, a new mechanism of scattering has been discovered which has an effect when a polymer matrix is obtained from the co-polymerization of different monomers. Actually this is the more commonly encountered situation, since mixtures of monomers are normally used to match the polymer and liquid crystal refractive indices (see N. Kavatsuki et al., Chem. Lett., 5, 333(1995); H. Ono et al., Jpn. J. Appl. Part I, 33, 6268 (1994)).

Applicants have observed that this mechanism is actually present in polymerization-induced phase separation processes, and that it produces severe scattering of light, in the "on" state, due to the resulting heterogeneity of the polymer matrix and to the consequent refractive index distribution of the dispersing medium. The faster curing components or those components that are less soluble in the liquid crystals will first separate to form the frame of the polymer matrix. The slower curing components or those components that are more soluble in the liquid crystal tend to separate later and to accumulate into the liquid crystal droplet. These components will finally polymerize at the interface. This mechanism creates, around the liquid crystal droplets, polymer layers having a different refractive index, which induces a strong light scattering action. Further sources of scattering could be due to the formation of low molecular weight polymer fractions, which can either dissolve into the liquid crystal for further polymerization, remain in contact with the droplets, or remain dispersed in higher molecular weight polymer regions.

Composites of liquid crystals dispersed in a polymer matrix, such as polymer-dispersed liquid crystal (PDLC) and nematic curvilinearly aligned phase (NCAP) devices, generally comprise droplets of a biaxially birefringent, nematic liquid crystal material dispersed in a transparent polymeric matrix. Such devices are of interest because they can be electrically controlled or switched between relatively translucent (i.e., light scattering or nearly opaque) and relatively transparent (i.e., light transmitting) states. This switching is possible because the liquid crystal droplets exhibit birefringence, i.e., optical anisotropy. All liquid crystals have two indices of refraction: an extraordinary index of refraction measured along the long axis of the rigid rodlike liquid crystals, and a smaller ordinary index of refraction measured in a plane perpendicular to the long axis. As a result, the droplets strongly scatter light when they are randomly oriented in the matrix and the devices appear translucent (or nearly opaque). On the application of either an electric field or a magnetic field, however, the long axes of the liquid crystal droplets become aligned along the direction of the electric/magnetic field vector and more directly transmit light.

If the refractive indices of the liquid crystal material and the polymer matrix are closely matched while in the field-induced, aligned state, the devices appear transparent. Thus, upon the application of an electric or magnetic field, for example, the device switches from a state in which it appears translucent (nearly opaque) to a state in which it appears transparent. Upon removal of the electrical or magnetic field, the device reverts to a translucent (opaque) state.

Devices containing composites of liquid crystals dispersed in a polymer matrix have found use as light valves, filters, shutters, information displays, architectural glass and windows, among others.

The compositing of liquid crystals in a polymer matrix is well known in the art. An early development in the use of such composites is described by Elliot in French Patent No. 2,139,537. Elliot used polymers as binders for liquid crystals by emulsifying the liquid crystals in a polymer and casting the composite into films. French Patent No. 2,139,537 states "it is advantageous to select a liquid crystal substance which has a refractive index similar to that of the film substrate and the binder, to avoid undesirable light diffusion effects from the emulsion film" and that "most organic compounds of this type have a similar refractive index to that of numerous substances among the polymers which could be used for the film or for the binder (i.e. about 1.5)". That technology was adopted by Fergason and called nematic curvilinearly aligned phases ("NCAP") liquid crystal by Fergason (see Fergason et al., U.S. Patent No. 4,789,858).

Another process for making composites of liquid crystals in polymers is called polymer dispersed liquid crystals (PDLC). It involves a number of phase separation processes for making uniform liquid crystal droplets in a polymer binder. Such phase separation processes include:
1. Polymerization-Induced Phase Separation (PIPS). In polymerization-induced phase separation, liquid crystal microdroplets form spontaneously in a polymer matrix upon the separation of the liquid crystal and matrix phases. Phase separation is induced by causing the uncured matrix material to polymerize. Phase separation by polymerization is useful when prepolymer materials are miscible with low molecular weight liquid crystal compounds. A homogeneous solution is made by mixing the prepolymer with the liquid crystal. Polymerization is achieved through a condensation reaction, as with epoxy resins, through free radical polymerization, as with a vinyl monomer catalyzed with a free radical initiator such as a benzoylperoxide, or through a photo-initiated polymerization. The solubility of the liquid crystal decreases in the growing polymers until the liquid crystal phase separates, forming droplets. The droplets isolate from each other and form a discontinuous phase within the polymer phase. The polymer phase is a continuous phase. The droplets grow until gelation of the polymer locks in the droplets. According to Doane et al., "Polymer Dispersed Liquid Crystals for Display Application," Mol. Cryst. Liq. Cryst., 1988, Vol. 165, pp. 511-532, 512, droplet size and morphology are determined during the time between droplet nucleation and gelation of the polymer. Size is controlled by the rate of polymerization, the relative concentrations of materials, the types of liquid crystals and polymers used, and by such physical parameters as viscosity, rate of diffusion, and solubility of the liquid crystal in the polymer. The rate of polymerization is controlled by cure temperature for thermally cured polymers or by light intensity for photochemical polymerization. During the phase separation, a portion of the liquid crystal is retained in the polymeric continuous phase and acts as a plasticizer of the polymer.
2. Phase Separation By Thermal Processes (TIPS). This process is useful for thermoplastics which melt below their decomposition temperature. A binary mixture of polymer and liquid crystal forms a solution at elevated temperature. Cooling the solution causes phase separation. The droplet size of the occluded material is governed by the rate of cooling and depends upon a number of material parameters, which include viscosity, chemical potentials, etc. As with the previous process, the liquid crystal droplets form a discontinuous phase and the polymer, the thermoplastic, forms a continuous phase. Also, some of the liquid crystal dissolves in the polymer and acts as a plasticizer.
3. Phase Separation By Solvent Evaporation (SIPS). This process is useful with thermoplastics which melt above the decomposition temperature of the thermoplastic or the liquid crystal, or where solvent coating techniques are used. The liquid crystal and polymer are dissolved in a common solvent to form a solution. The solvent is then removed by evaporation, resulting in phase separation and polymer solidification. In this case as with the others, the liquid crystal droplets form a discontinuous phase and the polymer forms a continuous phase.

Phase separation techniques are described by Taylor, U.S. Patent No. 3,935,337, who discloses the preparation of a liquid crystal-containing structure by incorporating a liquid crystal substance into a polymeric matrix so as to form a thin, layer-like structure of controlled thickness. Taylor states that the liquid crystal substance may be incorporated into the polymeric matrix by mixing liquid crystals with a polymerizable monomer or prepolymer followed by polymerization, using a polymer (or polymerizable monomer) as the medium (solvent) in which liquid crystal synthesis is carried out. Taylor's approaches include dissolving or dispersing the liquid crystal forming material in a polymer solution or molten polymer, then fabricating the polymer by a suitable technique (solution casting, molding, extrusion, etc.). Following solvent evaporation and/or cooling of the molten polymer, the polymer acts as a binder and protective matrix for the liquid crystals.

Taylor includes a method of incorporation of liquid crystals into polymer matrices that involves the preparation of a mixture of the liquid crystal and polymerizable monomer or prepolymer, followed by polymerization. This technique permits "embedment" of liquid crystals in matrices of thermosetting plastics, including phenol-formaldehyde resins; urea-formaldehyde resins; melamine-formaldehyde resins; epoxy resins; polyurethanes; unsaturated polyesters; and thermosetting acrylic resins.

Refinements to this technology are set forth in U.S. Patents Nos. 4,671,618, 4,673,255, 4,685,771, 4,688,900, 4,890,902, 4,994,204, 5,004,323, 5,087,387, 5,093,471, and 5,093,735.

The prime function of these technologies is to create a matrix system in which the liquid crystals are discretely and uniformly dispersed and where the matrix does not interfere with the function of the liquid crystals. In each of the above procedures, the structural relationship of the liquid crystal droplets to the polymer is similar.

Polymers used in making PDLC composites are from two categories, thermosetting polymers and thermoplastic polymers. The polymers used in the present invention are primarily the thermosetting polymers. The thermosetting polymers undergo a cure reaction where they are transformed from a lower molecular weight composition with heat, with or without catalyst, hardeners, modifiers, and the like, into a higher molecular weight cured thermoset resin. Thermosetting is the act of using heat to transform the lower molecular weight precursor to the cured product. The temperature needed to accomplish this is dependent upon the time given to the reaction, catalysts employed, and the relative reactivities of the complementary functional groups in the precursor. The thermosetting resin may be any known resin.

Thermosetting epoxy matrix resins that cure at temperatures from about 250°F. (121°C.) to about 350°F. (177°C.), or higher, are suitable for use in PDLC composites and are the most common matrix resins, but matrices of bismaleimide (BMI), phenolic, polyester, PMR-15 polyimide and acetylene terminated resins, typical high performance thermosetting resins, are also usable in PDLC devices. Other thermosetting resins such as thermosetting resins from acrylics, polyurethanes, free-radically induced thermosetting resins, and the like, may be used to make PDLC composites. The typical thermosetting resin is an A-stage resin, but in some cases it may be desirable to utilize a B-stage resin. A B-stage resin will affect the viscosity of the resin formulation.

Epoxy resins are a preferred material for making PDLC compositions because it is easy to mix epoxy resins having different refractive indices to produce a binder with a refractive index precisely matched with the extraordinary refractive index of the liquid crystal.

There are a variety of epoxy resins suitable for use in making PDLC composites. All epoxy resins start with an epoxy precursor that is capable of a homopolymerization reaction that is catalytically initiated, or coreacted with complementary functional compositions such as compounds with active hydrogen groups or other reactive groups capable of reacting with an epoxy resin to cause the molecular weight of the epoxy resin to increase. The performance of the cured epoxy resin is dependent upon the degree of functionality of the resin and the coreactant, the degree of aromaticity of the resin, the molecular weight of the epoxy resin and any coreactant prior to reaction, and the level of cure of the resin. The coreactant may be a curing agent and/or hardener.

Conventional thermosets, including epoxy-based thermoset, polymer dispersed liquid crystal composites present certain performance problems related to the properties of the polymer matrix. Common performance problems include weaker mechanical properties such as high brittleness and low heat resistance, low electrical resistivity, slow curing times, and a low stability range with respect to electrooptical properties.

A further problem with conventional polymer dispersed liquid crystal composite devices is "haze", more accurately termed the "angular dependence of light transmission." The phenomenon of "haze" is due to the perceived mismatch between the extraordinary refractive index of the liquid crystal microdroplets and the refractive index of the matrix when the viewing direction is different from the orthogonal.

An effort has been made in the art to overcome the problem of the angular dependence of light transmission. This effort involved the utilization of a birefringent liquid crystalline side-chain polymer in the polymer matrix instead of the conventional isotropic matrix (see Doane, U.S. Patent No. 4,994,204). The goal was to produce, in a PDLC device, a birefringent, optically anisotropic matrix in which the ordinary and extraordinary indices of refraction are matched for the polymer matrix material and the dispersed liquid crystal microdroplets. The cross-linked liquid crystal thermoset disclosed in U.S. Patent No. 4,994,204 is based upon a mixture of a commercially available epoxy resins and a mesogenic single amine curing agent. The resultant thermoset is that of a side-chain cross-linked polymer and is not a main-chain or comb-like thermoset. A problem associated with the approach embodied in U.S. Patent No. 4,994,204 relates to utilization of a curing agent containing a single amine. The use of such a curing agent markedly reduces the extent of cross-linking, which in turn reduces the glass transition temperature, reduces the mechanical performance of the resin, and increases the solubility of the liquid crystal microdroplets in the matrix after curing. The increase in the solubility of the microdroplets in the matrix is a significant disadvantage because of the critical importance of effecting and maintaining complete phase separation in polymer dispersed liquid crystal composites.

Because of the problems mentioned above, it would therefore be desirable to provide highly transparent polymer dispersed liquid crystals which would have a transmissability close to 100% of the expected theoretical value. In the present invention, applicants have also found a way to reduce the angular dependence of light transmission. In achieving the results of the present invention, it would be desirable not to compromise the degree of phase separation between the polymer continuous and liquid crystal discontinuous phases of the composite. The use of oligomers, especially oligomeric polyesters, provides advantages in the manufacture of highly transparent PDLC's.

### OBJECTS OF THE INVENTION

A primary object of the present invention is to provide a new process for making highly transparent polymer dispersed liquid crystals.

Another object of the present invention is to provide new oligomers for making highly transparent polymer dispersed liquid crystals.

A further object of the present invention is to provide new oligoesters for making highly transparent polymer dispersed liquid crystals.

Still another object of the present invention is to provide polymer dispersed liquid crystals having a light transmission close to 100% of the expected theoretical values.

A still further object of the present invention is to provide a novel method for making polymer dispersed liquid crystals which uses a partial curing step.

An additional object of the invention is to achieve high light transmission in polymer dispersed liquid crystals by use of novel oligoester materials.

Yet still another object is the use of a precuring step prior to thermally induced phase separation in the process of making polymer dispersed liquid crystals.

Moreover another object of the invention is to reduce substantially the light scattering or absorption by a polymer dispersed liquid crystal when an electric field is applied thereto.

These and other objects and advantages of the present invention will become more apparent as the following description proceeds.

To the accomplishment of the foregoing and related ends, the invention, then, comprises the features hereinafter fully described in the specification and particularly pointed out in the claims, the following description and the annexed drawings setting forth in detail certain illustrative embodiments of the invention, this being indicative, however, of several of the various ways in which the principles of the invention may be employed.

### SUMMARY OF THE INVENTION

Briefly, the present invention relates to a process for making a highly transparent polymer dispersed liquid crystal material comprising:
(a) mixing a liquid crystal with an oligomer having an appropriate refractive index;
(b) partially curing the resulting mixture of step (a);
(c) thermally inducing phase separation of the resulting mixture of step (b); and
(d) post curing the resulting polymer dispersed liquid crystal matrix of step (c) to complete phase separation. Post curing also stabilizes the optical, electrical and mechanical properties of the resulting PDLC films.

The process of the present invention is especially suitable for controlling the size of the liquid crystal droplets by varying the curing time prior to thermally induced phase separation. The process of the present invention eliminates many of the possible sources of light scattering, when the PDLC cells are in the "on" state.

The method of the instant invention substantially decreases the light scattering of current PDLC devices by making use of a single fluid polyester oligomer containing aryl groups or ethylenically unsaturated moieties, or both. In making the PDLC devices of the present invention, the oligomers can be further polymerized by either thermal initiation or ultraviolet (UV) initiation. The refractive index of the oligoesters of the present invention may be varied by adjusting the ratio of aryl groups to ethylenically unsaturated moieties.

The invention further relates to electrooptical devices comprising the PDLC's of the present invention.

### BRIEF DESCRIPTION OF THE FIGURES

Figure 1 describes the refractive index of the polyester oligomers as a function of the phenyl group to -C=C- group mole ratio, where R is -phenyl- or -C=C- in the chain.

Figure 2 illustrates the schematic of the experimental apparatus used to measure the electrooptical response of polymer dispersed liquid crystal films.

Figure 3 shows a graph of light transmission versus tilt angle measured from PDLC cells made by using an oligomer with a refractive index of 1.527.

Figure 4 describes the effect of post curing on the light transmission of PDLC cells described in Example 1.

Figure 5 is a graph of light transmission versus tilt angle of PDLC cells made by using an oligomer with a refractive index of 1.550.

### DETAILED DESCRIPTION OF THE PREFERRED EMBODIMENTS

The present invention relates to new oligomers and processes for making polymer dispersed liquid crystals. The invention contemplates composites of a liquid crystal discontinuous phase in a polymer matrix continuous phase in which the polymer matrix is derived from oligomers having ester, epoxy or urethane functionalities, or mixtures thereof.

The process of the present invention produces PDLC devices having a substantial reduction in the light scattering mechanism. In achieving the goals of the present invention, it is particularly desirable to use single fluid oligomers having ester, epoxy, or urethane functionalities, or mixtures thereof. The preferred oligomers are single fluid polyester oligomers having the formula

-(-OOC-R-COO-(CH₂)ₘ-)ₙ- (I)

wherein R is selected from cyclic and acyclic ethylenically unsaturated moieties having from two to ten carbon atoms, and unsubstituted and substituted aryl groups, and mixtures thereof; n is an integer from 2 to 50; and m is an integer from 2 to 5.

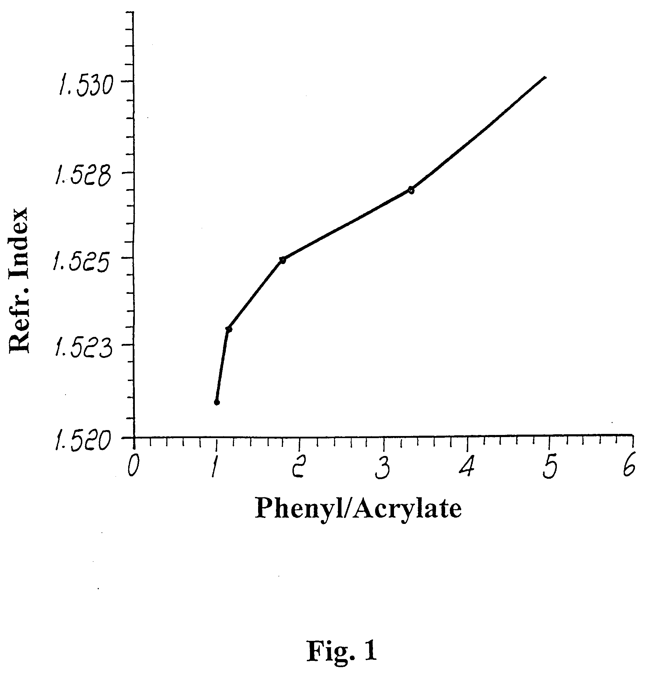

The polyester oligomers of formula (I) are particularly useful because they can be polymerized by thermal initiation and, more preferably, by UV photoinitiated polymerization. The polyester oligomers are also preferred because their refractive indexes can be easily adjusted by changing the ratio of the ethylenically unsaturated moiety and aryl groups introduced onto the oligomeric chains. In a preferred embodiment of the present invention, the ratio of phenyl to ethylenically unsaturated moiety can be varied from 10:2 to 1:1. The length of the methylene chain -(CH₂)ₘ- can be varied from 2 to 10, and more preferably from 2 to 5. Applicants have found that the refractive index increases when the percentage of phenyl groups is increased, as shown in Figure 1, or when the length of the methylene chain -(CH₂)ₘ- is reduced.

The polyester oligomers of the present invention are typically synthesized by the condensation reaction of a polycarboxylic acid or anhydride with a polyol such as glycol. The preferred polycarboxylic component is typically a dicarboxylic component and the polyol is typically an alkylene glycol or an alkylene glycol that has been derivatized with ethylene oxide or propylene oxide.

In making the polyester oligomers of the present invention, the reaction of the polyhydric alcohol component and the dicarboxylic acid component can be carried out in any desired order. Usually, an acid such as phthalic acid is reacted with the polyhydric alcohol, and the resulting product is then reacted with the unsaturated dicarboxylic acid. Alternatively, all of the reactants may be reacted simultaneously. The reaction temperature may be from 50^{o}C to 300^{o}C. It is preferred that the reaction be carried out in an inert atmosphere such as carbon dioxide, nitrogen or argon.

When ethylene oxide and/or propylene oxide are used as the polyhydric alcohol component, it is possible to react phthalic acid in advance with these alkylene oxides to form adducts of phthalic acid and alkylene oxide, and then react ethylene glycol or other glycol with the adducts and the remaining phthalic acid and unsaturated dicarboxylic acid, sequentially or simultaneously.

In preparing the adduct, it is possible to use the following as a reaction medium: aliphatic and alicyclic hydrocarbons such as benzene, toluene, n-hexane, n-heptane or cyclohexane; ketones such as methyl ethyl ketone or cyclohexanone; ethers such as dioxane; halogenated hydrocarbons such as chloroform or carbon tetrachloride; and mixtures thereof. The reaction may be carried out in the presence of a catalyst; with or without a solvent; at atmospheric or elevated pressures; and at a temperature of from about 10^{o}C to 300^{o}C. The mole ratios of the reagents are adjusted to minimize the light scattering of the PDLC's.

The preferred polyols used in making the polyester oligomers are typically glycols containing 2 to 10 carbon atoms and, in particular, alkylene glycols. Examples of suitable alkylene glycols include ethylene glycol, propylene glycol, tetramethylene glycol, pentamethylene glycol, hexamethylene glycol, decamethylene glycol, the position isomers thereof such as isopropylene glycol, neopentyl glycol, dimethyl tetramethylene glycol and the like, as well as mixtures thereof. Suitable dihydroxyalkenes include, for example, dihydroxybutene, dihydroxyhexene, and the like.

The above glycols derivatized with 3 to 10 moles of ethylene oxide or propylene oxide are also suitable for making copolyester oligomers.

The polycarboxylic acid or anhydride component used to make the polyester or copolyester oligomers of the present invention are either aromatic or ethylenically unsaturated. The polycarboxylic component is typically an aromatic dicarboxylic acid or its anhydride or a ethylenically unsaturated dicarboxylic acid or its anhydride. By 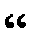 aromatic dicarboxylic acids 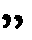 is meant those dicarboxylic acids that contain two carboxyl groups, with each carboxylic group being bonded to a carbon atom(s) in either an isolated or a condensed aromatic ring structure. It is not necessary that both of said functional carboxylic groups be bonded to the same aromatic ring; when more than one ring is present in the molecule, the functional carboxylic groups may be linked to each other by aliphatic or aromatic divalent radicals such as, e.g., -O-O or - SO₂- or even by a simple bond. Examples of aromatic dicarboxylic acids or their anhydrides which may be used are phthalic acid, bisphthalic acid, isophthalic acid, terephthalic acid, dibenzoic acid, dicarboxylic compounds substituted with two benzene rings, such as, e.g., bis(paracarboxylphenyl)methyl, 1,5-napthalene-dicarboxylic acid, 2,6-naphthalene-dicarboxylic acid, 2,7-napthalene-dicarboxylic acid, phenanthrene-dicarboxylic acid, anthracene-dicarboxylic acid, 4,4'-sulfonyl-dibenzoic acid, and their (C₁-C₁₂)-alkyl derivatives, and derivatives resulting from substitution on the ring, such as, e.g., halogenated derivatives, alkoxy derivatives, and aryl derivatives.

Aromatic acids containing a hydroxyl group, such as, e.g., para-(β-hydroxyl-ethoxy)-benzoic acid, may also be used if an aromatic dicarboxylic acid is also present.

The unsaturated dicarboxylic acids used in this invention are known as the unsaturated dicarboxylic acid component of unsaturated polyesters, and include compounds containing two carboxyl groups (-COOH) or one acid anhydride group (-CO-O-CO-) and one ethylenic unsaturation (>C=C<) in the molecule. Preferred acids are the unsaturated dicarboxylic acids having four to six carbon atoms. For example, maleic anhydride, maleic acid, fumaric acid, itaconic acid, citraconic acid, mesaconic acid, chloromaleic acid, and mixtures thereof can be used. Of these, maleic anhydride and fumaric acid are preferred because of their ready availability, relatively low cost, and the excellent results obtainable.

The solubility of the liquid crystal in the polyester or copolyester oligomer of the present invention can be varied by substituting part of the -(CH)ₘ- group with from 3 to 10 oxyethylene moieties or mixtures thereof.

The oligomers of the present invention are typically prepared from two polycarboxylic reagents and two glycols typically in a mole ratio of 0.8 : 0.5 : 1.0 : 0.4, respectively. For example, when making a copolyester oligomer derived from (bis)phthalic anhydride, maleic acid, pentanediol and triethylene glycol, the mole ratios are 0.8 : 0.5 : 1.0 : 0.4, respectively. Other appropriate mole ratios may also be used.

When the polyesters or copolyester oligomers of the present invention are used to make PDLC devices, it is necessary to cure them during processing. The curing is accomplished in the presence of a thermal initiator or an ultraviolet initiator in the presence of small amounts, typically 0.5 to 3.0% of an ethylenically unsaturated monomer such as methylmethacrylate, acrylic acid or styrene. The ethylenically unsaturated monomer acts to induce cross-linking. The preferred initiators are UV initiators such as benzoin ethyl ether and benzophenone.

The preferred polyester or copolyester oligomers for making the PDLC devices are derived from monomers selected from of (bis)phthalic anhydride, phthalic anhydride, fumaric acid, maleic acid, pentanediol, and triethylene glycol.

The polyester or copolyester oligomers described above are used as the dispersing medium when making PDLC devices.

Another preferred embodiment of the present invention is a process for making highly transparent PDLC's comprising:
(a) mixing a liquid crystal material in a polyester or copolyester oligomer at a temperature range of about 70^{o} to 90^{o}C to obtain a clear solution;
(b) partially curing the mixture of step (a) for a period of time ranging from 0 to 30 minutes;
(c) cooling the resulting sample of step (b) to induce phase separation; and
(d) post-curing the resulting polymer dispersed liquid crystal matrix of step (c), to complete phase separation. The post-curing step stabilizes the optical, electrical and mechanical properties of the resulting films.

As explained above, the preferred oligomers are those corresponding to Formula I and the preferred curing agents are UV initiators such as benzoin ethyl ether and benzophenone. The curing is typically done in the presence of small amounts, typically 0.5-3% by weight, of an ethylenically unsaturated monomer such as acrylic acid. Other monomers such as methacrylic acid, C₁-to C₄- alkyl acrylates, C₁- to C₄- alkyl methacrylates, styrene, or mixtures thereof may also be used.

In using the above process for making PDLC's, the size of the liquid crystal droplets may be regulated by varying two factors: the viscosity of the mixture in step (b) and the cooling rate in step (c). Longer partial curing times result in high viscosity and smaller final droplet sizes. By varying the partial curing time between 0 and 30 minutes, the diameter of the microdroplets can be changed between less than 1 µm and 10 µm.

The process of phase separation is typically done by thermal induction, i.e., cooling. The mixture of polyester oligomer and liquid crystal is cooled to cause phase separation. The droplet size of the occluded material is governed by the rate of cooling and depends upon a number of physical parameters, which include viscosity, chemical potentials, etc. The liquid crystal droplets form a discontinuous phase, and the polymer forms a continuous phase.

The liquid crystal materials which are useful in carrying out the present invention includes smetics, nematic, cholesteric, ferroelectrics, as well as organometallic mesogens.

Typical organic classes of liquid crystal-forming materials that may be used include both aromatic and aliphatic organic compounds such as benzylideneanilines, generally prepared from the reaction of para-substituted benzaldehyde and parasubstituted aniline; N-(p-alkoxybenzylidene)-p-aminostyrenes, prepared from the reaction of the appropriate aldehyde with p-aminostyrene; derivatives of beta sitosterol; active amyl ester of cyano benzylidene amino-cinnamate; p-phenylene containing compounds such as p-phenylene p-alkoxybenzoates; aminoacetophenones; aminopropiophenones; phenylenediamines; chlorophenylenediamines; terphthals; p,p'-disubstituted diphenylacetylenes; p,p'-disubstituted-1,4-diphenylbutadienes; p,p'-diisubstituted phenyl benzoates; substituted phenyl alkyl carbonates and diphenyl carbonates; p-n-alkyl benzoic acids; p-n-alkoxy benzoic acids; and Schiff bases prepared from p-substituted benzaldehydes and compounds of the following types: p-phenylenediamines, 4,4'-diaminobiphenyls, 4-phenylazoanilines, naphthylamines, and naphtylenediamines.

Specific liquid-crystal compounds include ethyl p-4-ethoxybenzylideneaminocinnamate; p,p'-azoxybenzoic acid diethyl ester; N-(p-methoxy-benzylidene)-p-aminostyrene; N-(p-butoxybenzylidene)-p-aminostyrene; p-azoxyanisole; p-hexyloxybenzalazine; p-azoxy-phenetole; p-anisylidene-p-biphenylamine; p-ethoxy-benzylindene-p-biphenylamine; p-anisylidene-p-aminophenyl acetate; p-ethoxybenzylidene-p-aminophenyl acetate; p-n-hexyloxybenzylidene-p-aminophenyl acetate; p-n-hexoloxybenzylidene-p-aminophenyl acetate; deca-2,4-dienoic acid; 4,4' di-n-heptoxyazoxybenzene; 4,4' di-n-pentoxyazoxybenzene; 4,4' di-n-butoxyazoxybenzene; 4,4'diethoxy-azoxybenzene; undeca-2,4-dienoic acid; nona-2,4-dienoic acid; 4,4' dimethoxystilbene; 2,5-di(p-ethoxybenzylidene)cyclopentanone; 2,7-di-(benzylideneamino) fluorene; 2-p-methoxybenzylideneamino-phenanthrene; 4-methoxy-4''-nitro-p-terphenyl; 4-p-methoxybenzylideneaminobiphenyl; 4,4'-di(benzylideneamino)biphenyl; p-n-hexylbenzoic acid; p-n-propoxybenzoic acid; trans-p-methoxycinamic acid; 6-methoxy-2-naphtholic acid; p-phenylene di-p-anisate; p-phenylene di-p-ethoxybenzoate; p-phenylene di-p-n-hexyloxybenzoate; p-phenylene di-p-n-heptyloxybenzoate; p-phenylene di-p-n-octyloxybenzoate; 1,4-bicyclo[2.2.2.]octylenedi-p-anisate; 1,4-bicyclo[2.2.2]octylene di-p-n-octyloxybenzoate; trans-1,4-cyclohexylene di-p-n-butoxybenzoate; 4,4'-di(p-methoxybenzylideneamino)dibenzyl; p,p'-diacetoxystilbene; 1,2-di(p-methoxyphenyl)-acetylene; p-(p-acetoxyazo) benzoic acid; 1,4-di-(p-methoxyphenyl)-butadiene; p-anisal-p-anisidine; p,p'dimethoxydibenzal-1,4-naphthalenediamine; p-n-butylbenzoic acid; p,p'-di-n-butyldiphenylpyridazine; p-(p-cyanobenzal) anisdine; p-(p-methoxybenzoxy benzoic acid, anisal-p-aminozobenzene; 1-(4'-anisalamino)-4-phenylazonaphthalene; N-(p-methoxybenzylidene)-p-n-butylaniline; N-(p-n-octyloxybenzylidene)-p-n-butylaniline; p-anisylidene-p-phenylazoaniline; N,N'-dibenzylidenebenzidine; N,N'-di(p-n-hexyloxybenzylidene) benzidine; p-bis(-heptyloxybenzoyloxy)benzene; p-n-propoxybenzoic acid; p-n-butoxybenzoic acid; p-n-amyloxybenzoic acid; p-n-hexyloxybenzoic acid; p-n-heptyloxybenzoic acid; p-n-octyloxybenzoic acid; butyl-p-(p-ethoxy-phenoxycarbonyl)phenylcarbonate; p-(p-ethoxy-phenylazo)phenylheptanoate; 4-[(p-hexyloxycarbonyloxybenzylidene)amino]-1-pentyloxybenzene; N-p-(pentyloxycarbonyloxy)benzylidene]-p-anisidine; p-[(p-butoxy-phenyl)azo]phenyl butyl carbonate; p-(p-ethoxyphenylazo)phenyl hexanoate; p-(p-ethoxy-phenylazo)phenyl valerate; p-[(p-ethoxybenzylidene)amino]benzonitrile; p-[(p-methoxybenzylidene)amino]benzonitrile; ethyl p-[(p-methoxybenzylidene)amino]cinnamate; p-(p-ethoxypheny-lazo)-phenyl crotonate; p-[(p-methoxybenzylidene)amino]-phenyl p-toluate; p-[(p-methoxybenzylidene)amino]-phenylbenzoate; p-[(p-ethoxybenzylidene)amino]phenylbenzoate; N,N'-di(p-methoxybenzylidene)-α, α'-biptoluidine; p-anisalazine; 4-acetoxy-3-methoxycinnamic acid; p-acetoxycinnamic acid; 4'-[(p-pentyloxycarbonyloxybenzylidene)amino-valerophenonel diethyl p,p'-azoxydicinnammate; 4-butoxybenzylidene-4'-aminoacetophenone; 4-decyloxybenzylidene-4'-aminoacetophenone; 4-dodecyloxybenzylidene-4'-aminoacetophenone; 4-heptyloxybenzylidene-4'aminoacetophenone; 4-hexyloxybenzylidene-4'-aminoacetophenone; 4-methoxybenzylidene-4'-aminoacetophenone; 4-nonyloxybenzylidene-4'-aminoacetophenone; 4-octyloxybenzlidene-4'-aminoacetophenone; 4-pentyloxybenzylidene-4'-aminoacetophenone; 4-propoxybenzylidine-4'-aminoacetophenone; 4-butoxybenzylidene-4'-aminopropiophenone; 4-heptyloxybenxylidene-4'-aminopropiophenone; 4-hexyloxybenzylidene-4'-aminopropiophenone; 4-methoxybenzylidene-4'-aminopropiophenone; 4-nonyloxybenzylidene-4'-aminopropiophenone; 4-octyloxybenzylidene-4'-aminopropiophenone; 4-pentyloxybenzyidene-4'-aminopropiophenone; 4-propoxybenzylidene-4'aminopropiophenone; bis-(4-bromobenzylidene)-2-chloro-1,4-phenylenediamine; bis-(4-chlorobenzylidene)-2-chloro-1,4-phenylenediamine; bis-(4-n-decyloxybenzylidene)-2-chloro-1,4-phenylenediamine; bis-(4-n-dodecyloxybenzylidene)-2-chloro-1,4-phenylenediamine; bis-(4-n-hexyloxybenzylidene)-2-chloro-1,4-phenylenediamine; bis-(4-methoxybenzylidene)-2-chloro-1,4-phenylenediamine; bis-(4-nonyloxybenzylidene)-2-chloro-1,4-phenylenediamine; bis-(4-n-octyloxybenzylidene)-2-chloro-1,4-phenylenediamine; bis-(4-n-pentyloxybenzylidene)-2-chloro-1,4-phenylenediamine; bis-(4-bromobenzylidene)-1,4-phenylenediamine; bis-(4-chlorobenzylidene)-1,4-phenylenediamine, bis-(4-n-decyloxybenzylidene)-1,4-phenylenediamine; bis-(4-n-dodecyloxybenzlidene)-1,4-phenylenediamine; bis-(4-fluorobenzylidene)-1,4-phenylenediamine; bis-(4-n-heptyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-hexyloxybenzylidene)-1,4-phenylenediamine; bis-(4-n-nonloxybenzlidene)-1,4-phenylenediamine; bis-(4-n-octyloxybenzylidene)-1,4-phenylenediamine; bis-(4-n-pentyloxybenzylidene)-1,4-phenylenediamine; terephthal-bis-(p-bromoaniline); terephthal-bis-(p-chloroaniline); terephathal-bis-(p-fluoroaniline); terephthal-bis-(p-iodo-aniline), and the like.

Nematic liquid crystalline materials suitable for use with the organometallic liquid crystals include: p-azoxyanisole, p-azoxyphenetole, p-butoxybenzoic acid, p-methoxy-cinnamic acid, butyl-p-anisylidene-p-aminocinnamate, anisylidene p-amino-phenylacetate, p-ethoxy-benzal-amino-α -methyl-cinnamic acid, 1,4-bis(p-ethoxybenzylidene) cyclohexanone, 4,4'-dihexyloxybenzene, 4,4'-diheptyloxybenzene), anisal-p-amino-azo-benzene, anisaldazine, α-benzene-azo-(anisal-α'-naphthylamine), n, n'-nonoxybenzetoluidine; anilines of the generic group (p-n-alkoxybenzylidene-p-n-alkylanilines), such as p-methoxybenzylidene p'-n-butylaniline, p-n-butoxybenzylidene-p'-aminophenylacetate, p-n-octo-xybenzylidene-p'-aminophenylacetate, p-n-benzylideneproprionate-p'-aminophenylmethoxide, p-n-anixylidene-p'-aminophenylbuterate, p-n-butoxybenzylididene-p'-aininophenylpeatoate and mixtures thereof. Conjagated cyano-organic compounds that are useful are 7, 7', 8, 8'-tetracyanoquinodimethane (TCNQ), (2,4,7,-trinitro-9-fluorenylidene)-malono-nitrile (TFM), p-[N-(p'-methoxybenzylidene)amino]-n-butyl-benzene (MBBA), p-[N-(p'-ethoxybenzylidene)amino]amino]-butylbenzene (EBBA), p-[N-(p'-methoxybenzylidene)amino]phenyl butyrate, n-butyl-p-(p'-ethoxyphenoxycarbonyl)phenylcarbonate, p-methoxy-p'-n-butylazoxy-benzene, p-ethoxy-p'-n'-butylazobenzene, p-[N-(p'methoxybenzylidene)amino]benzonitrile (BBCA), p-[N-(p'-methoxybenzylidene)amino]benzonitrile (BBCA), p-[N-(p'-hexylbenzylidene)amino]benzonitrile (HBCA), pentylphenylmethoxy benzoate, pentylphenylpentyloxy benzoate, cyanophenylpentyl benzoate, cyanophenylheptyloxy benzoate, cyanophenyloctyloxy benzoate, cyanophenylmethoxy benzoate, and the like.

Desirable nematic liquid crystals frequently comprise cyanobiphenyls, and may be mixed with cyanoterphenyls and with various esters. There are commercially available nematic type liquid crystal mixtures, such as liquid crystal mixture "E7" (Licrilite® BL001, from E. Merck, Darmstadt, Germany, or its subsidiaries such as EM Industries, Hawthorne, N.Y., and Merck Industrial Chemical, Poole, England) that is a mixture of (by weight), 51% 4'-n-pentyl-n-cyanobiphenyl (5CB), 21% 4'-n-heptyl-n-cyanobiphenyl (7CB), 16% 4'-n-octoxy-4-cyanobiphenyl, and 12% 4'-n-pentyl-4'-n-pentyl-4-cyanoterphenyl and that has a crystal to nematic liquid crystal phase transition temperature of - 10°C and a liquid crystal to isotropic phase transition temperature of 60.5°C. Illustrative of other such commercial liquid crystal mixtures are the following.

E-31 is a mixture of cyanobiphenyls and a non-cyano biphenyl ester, available from E. Merck, *supra*, and having a crystal to nematic crystal phase transition temperature of -9°C and a liquid crystal to isotropic phase transition temperature of 61.5°C. E-44 is a mixture of cyanobiphenyls, a cyanoterphenyl and a non-cyano biphenyl ester, available from E. Merck, *supra*, and having a crystal to nematic liquid crystal phase transition temperature of -60°C and a liquid crystal to isotropic phase transition temperature of 100°C. E63, from E. Merck, *supra*, is a liquid crystal mixture that is similar to the E7 with added cyclohexanes; it contains significant amounts of the commonly known liquid crystal component 5CB, 7CB, lesser amounts of 5CT, lesser amounts of Benzonitrile,4-(4 propyl-1-cyclohexen-1-yl), commonly known as PCH3, lesser amounts of 4-carbonitrile,4'(4-pentyl-1-cyclohexen-1-yl)-1,1'-biphenyl, commonly known as BCH5, and still lesser amounts of [1,1'-Biphenyl]-4-carboxylic acid, 4'heptyl-4'-cyano[1,1'-biphenyl]-4-yl ester, commonly known as DB71. K-12 is 4-cyano-4'-butylbiphenyl and has a crystal to nematic liquid crystal phase transition temperature of 48°C. K-18 is 4-cyano-4'-hexylbiphenyl and has a crystal to nematic liquid crystal phase transition temperature of 14.5°C and a liquid crystal to isotropic phase transition temperature of 29°C. K-21 is 4-cyano-4'-heptylbiphenyl and has a crystal to nematic liquid crystal phase transition temperature of 30°C. K-24 is 4-cyano-4'-octylbiphenyl and has a crystal to smectic A liquid crystal phase transition temperature of 21.5°C, a smectic C to nematic liquid crystal phase transition temperature of 33.5°C, and a nematic liquid crystal to isotropic phase transition temperature of 40.5°C. M-15 is 4-cyano-4'-pentoxybiphenyl and has a crystal to nematic liquid crystal phase transition temperature of 48°C and a liquid crystal to isotropic phase transition temperature of 68°C. M-18 is 4-cyano-4'-hexoxybiphenyl and has a crystal to nematic liquid crystal phase transition temperature of 57°C and a liquid crystal to isotropic phase transition temperature of 75.5°C. M-24 is 4-cyano-4'-octoxybiphenyl and has a crystal to smectic A liquid crystal phase transition temperature of 54.5°C, a smectic A to nematic liquid crystal phase transition temperature of 67.0°C, and a nematic to isotropic phase transition temperature of 80.0°C. Other desirable Licrilite® liquid crystal mixtures include BL003, BL004, BL009, BL011, BL012, BL032, BL036, BL037, BL045, BL046, ML-1001, ML-1002, as well as TL202, TL203, TL204 and TL205, all obtainable from E. Merck, *supra*.

TOTN404, available from Hoffman-LaRoche, Basel, Switzerland and Nutley, N.J., is a liquid crystal mixture similar to E7 but with added pyrimidines. It contains approximately 30 weight percent of 4-carbonitrile,4'-pentyloxy-1,1'-biphenyl, commonly known as 50CB, 14 weight percent of 4-carbonitrile,4'-octyloxy-1,1'-Biphenyl, commonly known as 80CB, 10 weight percent of 4-carbonitrile-4''-pentyl-1,1',4',1''-terphenyl, commonly known as 5CT, 10 weight percent of 4-(4-pentyl-2-pyrimidimyl)-benzonitrile, commonly known as RO-CP-7035, 20 weight percent of 4-(4-heptyl-2-pyrimidimyl)benzonitrile, commonly known as RO-CP-7037, and 15 weight percent of 4-[5-(4-butylphenyl)-2-pyrimiedinyl]benzonitrile, commonly known as RO-CM-7334.

ROTN-570, available from Hoffman-LaRoche is a cyanobiphenyl liquid crystal mixture that contains 51 weight percent of 4-cyano-4'-pentylbiphenyl, 25 weight percent of 4-cyano-4'-heptylbiphenyl, 16 weight percent of 4-cyano-4'-octyloxybiphenyl, and 8 weight percent of 4-cyano-4'-pentyl-p-terphenyl. Another desirable liquid crystal mixture from Hoffman-LaRoche is TNO623.

To prepare a shutter device containing the composite of the present invention, conducting glass substrates are used. Glass or polystyrene spacers are used to control film thickness. For example, a microspacer of 10 microns may be used. The spacers are sprinkled over one substrate prior to pouring onto it the polymer dispersed liquid crystal formulation. The electrooptical cells are drop filled with an excess of the polymer dispersed liquid crystal formulation being poured on the glass substrate and a second glass substrate is added, and pressed until it contacts the spacers. For small shutters (6.5cm²), manual pressing may be used to place the top substrate. Contact of the glass spacers can be easily felt. A vacuum press should be used for larger polymer dispersed liquid crystal films. In each instance, the samples are cured with no external pressure. The polymer dispersed liquid crystal shutter is cured in a convection oven set to the appropriate temperature or cured by ultraviolet radiation at the appropriate temperature. For example, the polymer dispersed liquid crystal shutter may be placed on a thick (>¹/₄ inch) aluminum sheet covered with aluminum foil. Adhesive tape is used to hold the shutters in position during cure. The droplet size of the polymer dispersed liquid crystals depends on the cure temperature. Generally, cure temperatures of approximately 60 to 120^{o}C are used.

It is important that the samples be cured long enough for droplet formation and growth and polymer gelation. A curing time prior to phase separation of 0 to 30 minutes is typical. In general, the samples cannot be over-cured.

The samples may additionally be post-cured. Post-curing is the practice of a second curing step using UV light at a temperature of from 0 to 60°C, but typically for a longer period of time than the first curing step. As illustrated in the examples that follow, post-curing can improve the performance of PDLC composites with respect to certain properties.

Once the polymer dispersed liquid crystal has been cured, the samples are cleaned. Excess material is removed with a razor blade and the surfaces may be cleaned with cloth and acetone.

In an embodiment of the invention, a film 40 µm thick of the polymer dispersed liquid crystal material of the invention has a percent transmissibility of at least 85 percent when measured at a tilt angle of zero according to the test method described below. In other embodiments, the precent transmissibility is at least 90 percent, more preferably at least 95 percent.

The invention further contemplates an electrooptical device containing a composite of the present invention. The devices of the invention include a thermally, electrically, magnetically and/or electromagnetically addressable liquid crystal electrooptical cell that has a volume of liquid crystal-polymeric composite of the invention between two closely spaced electrodes in which the liquid crystal discontinuous phase is responsive to an applied voltage between the electrodes such that light transmittance through the liquid crystal material is selectable depending upon the resulting electric field strength, current flow, or charge passed through the cell. The cells typically contain sealant layers, support layers of transparent, electrically conductive film having sufficient supporting strength to maintain the structural integrity of the cell; polarizer elements when desirable; and associated adhesives; and the like.

The electrooptical liquid crystal cells can be conveniently fabricated by a variety of techniques known in the art. The present invention is particularly well suited for the preparation of large pieces of the composite material, from which smaller pieces can be later cut and used in fabricating a cell. For example, the cell can consist of two plastic sheet electrodes made conductive by means of a tin oxide coating, separated by a melt of solution-formed microdispersion of liquid crystal composite-forming material, the preparation of which is described by P.S. Drzaie, 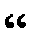 Polymer Dispersed Nematic Liquid Crystal For Large Area Displays and Light Valves 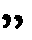 , J. Appl. Phys., 60(6), Sept. 15, 1986. Alternately, one electrode of the electrooptical liquid crystal cells can result from a conductive coating, such as tin oxide, applied to a glass pane. This conducting glass pane can be a conductive plastic sheet to complete the cell.

The device of the invention with liquid crystal in the polymer continuous phase will contain a microdispersion of material, typically in the shape of liquid crystal microdroplets on the order of 0.1 to 10 microns, which will either scatter or transmit incident light. In the absence of an applied field, the optic axes of the microdroplets have no preferred direction, and the incident light encounters a mismatch between the indices of refraction of the matrix and of the microdroplets. This mismatch results in light being scattered and the device appears opaque. With application of an electric field across the sheet of liquid crystalline-polymeric composite material, the optic axes align parallel to the field and normal to the surface of a sheet of the composite. Incident light detects no mismatch between the indices of refraction and is transmitted so that the device appears transparent.

The liquid crystal devices of the invention may or may not have an image memory. Images formed by contrasting opaque and clear areas are displayed on these devices by the constant application of a field to those areas desired to appear clear. Once the field is removed, the clear areas switch back to opaque in less than about 200 milliseconds, typically less than about 150 milliseconds and in a preferred embodiment, less than about 50 milliseconds. The liquid crystal-polymer composite of the invention can have optical memory in that light scattering devices that include the composite can be manipulated to display contrasting opaque and clear areas which are field independent. Memory is made possible by the selection of a liquid crystal which remains in the liquid crystalline state at temperatures above the softening temperature of the polymer. The liquid crystal is in the liquid crystalline state while the polymer is soft and, as a result, the optic axes of the discontinuous phase microdroplets can be aligned by an external field. Maintaining the external field in the course of rehardening the polymer provides a composite in which the microdroplets exposed to the field remain aligned upon the field's removal. With an external field applied to the entire surface of the composite film during hardening of the thermoplastic, a wholly transparent material results; a patterned field as, for instance, an alpha numeric character, applied during hardening of the polymer will result in a material displaying a clear (transmitting) character in an opaque (scattering) field. The clear area or areas will remain so until the random alignment of the optic axes is restored by reheating the material and cooling it in the absence of a field.

The electrooptical characteristics of the PDLC films were measured with a photometric system, and the transmittance-voltage, switching times and angular transmittance of the samples were measured as functions of time.

In order to make the present invention still better understood, some examples are reported below which are of a merely illustrative character, and are in no way limitative of the invention.

### EXAMPLE 1

The oligomer used in this example was synthesized by the condensation reaction of (bis)-phthalic anhydride, maleic acid, pentanediol, and triethyleneglycol in a mole ratio of 0.8 : 0.5 : 1.0 : 0.4, plus 5 weight % of octanoic acid.

The refractive index of this oligomer was 1.525. When the oligomer was mixed with with 2% acrylic acid, 2% benzoin ethyl ether and 2% benzophenone, and cured by UV light, the refractive index was measured to be 1.527.

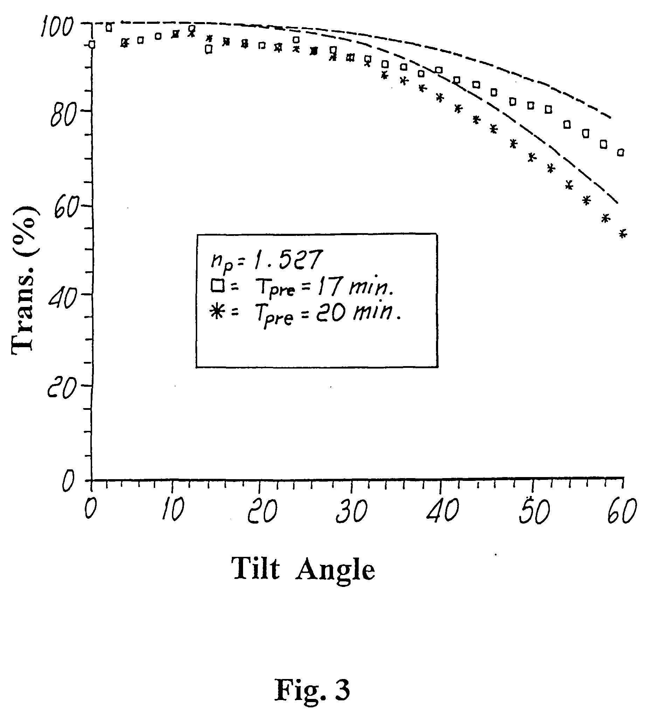

Equal weights of the above oligomer and the liquid crystal E7, available from Merck, Darmstadt, Germany, were mixed with benzoin ethyl ether (2 weight percent) and benzophenone (2 weight percent) and acrylic acid (1 weight percent) at a temperature of 90^{o}C. The homogeneous mixture was sandwiched between two ITO (indium tin oxide) coated glass sheets. The thickness of samples was of 40 µm ± 2 µm and was controlled by spacers. Cells were placed under an 80W mercury lamp, at a temperature of 90^{o}C. To show the influence of pre-phase separation curing time on the light transparency of the PDLC film, electrooptical data was taken from samples precured for 10 and 17 minutes, respectively, and the results are shown in Figure 3. Successively, the samples were cooled at room temperature to induce phase separation. After phase separation, the samples were further cured at a curing temperature of 20°C under UV light using an 80W mercury lamp. The mercury lamp was placed 10 cm from the sample and the samples were exposed to the light for 1 hour.

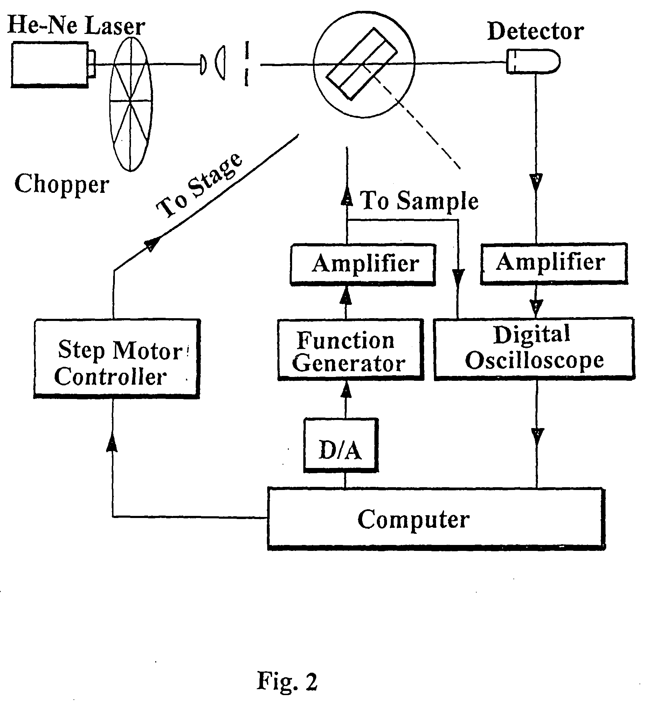

The transmission of samples was measured using the experimental setup shown in Figure 2.

Using the experimental setup shown in Figure 2, a light beam derived from an He-Ne laser was passed through a chopper, beam expanding lenses, and through a 30% attenuator to reduce the intensity into the linear range of the detector. Finally the size of the beam was adjusted to 0.8 mm by a variable iris, before entering into the samples. The geometry of the experiment was such that the detector could collect the outgoing light within an angle of 2.5^{o}. Samples were mounted on a computer controlled rotating stage to vary the incident angle (the angle between the incident light and the normal to the film). Measurement of transmissibility of the films were taken at the temperature of 30^{o}C, which is the temperature at which the refractive index of the E7 liquid crystal was measured to be 1.525. Reflection at the surface of the sample was taken into account by an appropriate correction factor. In this first example the refractive indices of the polymer matrix and of the liquid crystal were nearly matched. The transmissions of the samples in the "on" state versus the incidence angle are illustrated in Figure 3.

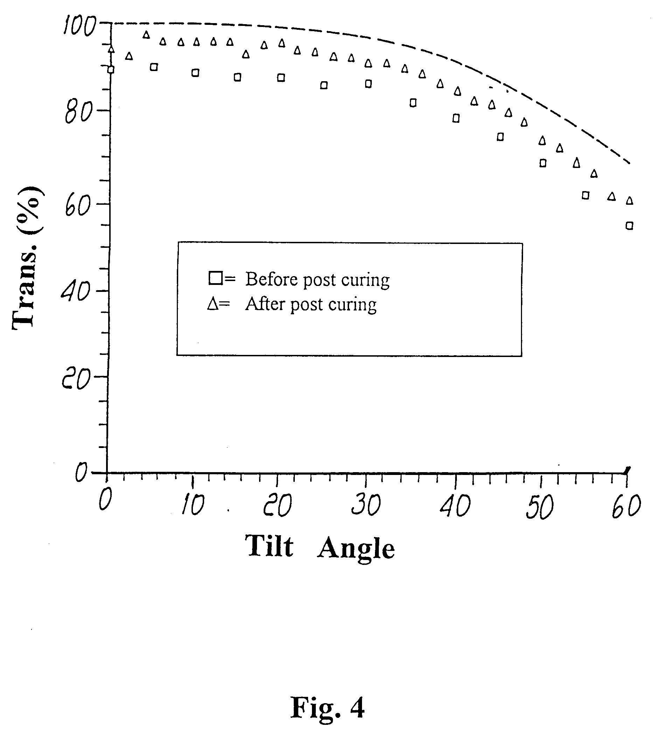

The upper curve corresponds to the sample precured for 20 minutes, while the lower one corresponds to the sample precured for 17 minutes. The "off" state transmissions, which are not reported in Figure 3, for the above samples were 12% and 2.3%, respectively. Applicants' have performed calculations of the transmitted light on the basis of their theoretical model which takes into account scattering due to the mismatching of the liquid crystal refractive index with respect to that of the polymer matrix. The dashed line reported in Figure 3 are the calculated fits to the experimental curves by assuming droplet radius of 0.7 µm (upper curve) and 1.4 µm (lower curve). The model illustrates quite well the behavior of the real samples, indicating that the inventive process applied to film preparation reduces to negligible values the light scattering due to the liquid crystal and polymer matrix inhomogeneity. The small discrepancy between the experimental and calculated curves can be explained by the fact that the theoretical model takes into account only the scattering due to a single droplet. The transmissibility of the PDLC films can be further increased by post curing the samples after the TIPS phase separation. This effect is clearly demonstrated in Figure 4.

With the process of the present invention, it is now possible to make PDLC films having a light transmission close to 100% of the expected theoretical number as compared to 85% using current state-of-the-art materials and processes.

### EXAMPLE 2

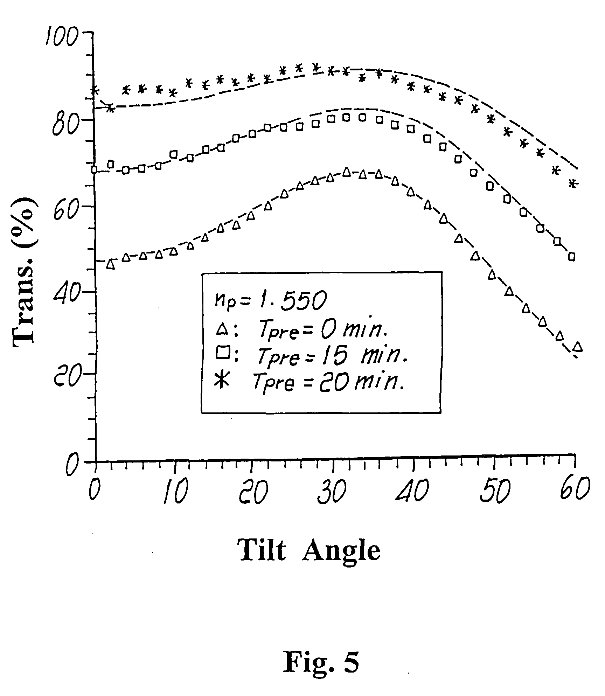

This example further illustrates how the improved process of the present invention allows one to regulate the morphology and light transmission properties of the PDLC by adjusting the pre-phase separation curing time. The oligomers used in this example were prepared by using phthalic anhydride, maleic acid, propanediol, and triethyleneglycol, in a mole ratio of 1.0 : 0.3 : 1.0 : 0.3. The refractive index of this oligomer was 1.550 and much higher with respect to the liquid crystal nₒ. As a consequence, the transmissibility of the PDLC was reduced and the maximum of transmission is shifted at values of the incident angle quite different from zero. PDLC cells were prepared in the same way as illustrated in Example 1. Three different samples corresponding to three different pre-phase separation curing time (0, 15, and 20 minutes) have been investigated. The results are shown in Figure 5.

The radius of the droplets which give the best fit curves (dashed lines) are 1 µm, 2 µm, and 4 µm, in the case of 20, 15, and 0 minutes of pre-phase separation curing time, respectively. Again, one can appreciate the flexibility of this process with respect to the regulation of the morphology of PDLC systems.

The improved results of Example 1 are illustrated in Figures 3 and 4. Figure 3 shows the light transmission versus tilt angle measured from PDLC cells made using an oligomer having a refractive index of 1.527. In Figure 3, "Tₚᵣₑ" represents the pre-phase separation curing time. The dashed lines are the best fit to experimental curves calculated by using droplet diameters equal to 1.4 µm (lower curve) and 0.7 µm (upper curve). Figure 4 shows the effect of post-curing on the light transmission of PDLC cells described in Example 1.

The results of Example 2 are illustrated in Figure 5 which shows light transmission versus tilt angle of PDLC cells made by using an oligomer having a refractive index of 1.550. The "Tₚᵣₑ" represents the pre-phase separation curing time. The dashed lines are the best fit to experimental curves calculated by using droplet diameters equal to 8 µm (lower curve), 4 µm (middle curve), and 4 µm (upper curve).

### EXAMPLE 3

Several oligomers such as those of Examples 1 and 2 were synthesized wherein the phenyl group to -C=C- group ratio was varied from 10:2 to 1:1 in oligomers having the formula -(-OOC-R-COO-(CH₂)₅-)ₙ-. The refractive indices for these oligomers are shown in Figure 1. It is noted as shown in Figure 1 that the refractive index increases when the percentage of phenyl groups is increased or when the length of the alkane chain is decreased.

### EXAMPLE 4

An oligomer such as the one of Example 2 was synthesized except maleic acid was replaced by famaric acid.

While the invention has been described in connection with exemplary embodiments thereof, it will be understood that may modifications will be apparent to those of ordinary skill in the art and that this application is intended to cover any adaptations or variations thereof. Further modifications may be made without departing from the broad teachings of this invention, the scope of which is defined by the following claims.

## Claims

1. A process for making a polymer dispersed liquid crystal material comprising:
(a) mixing a liquid crystal material with an oligomer:
(b) partially curing the resulting mixture of step (a);
(c) thermally inducing phase separation of the resulting mixture of step (b); and
(d) post curing the resulting polymer dispersed liquid crystal matrix of step (c),
to complete phase separation.

2. The process of claim 1, wherein the oligomer is a polyester oligomer.

3. The process of claim 2, wherein the polyester oligomer has the following structure:
-(OOC-R-COO-(CH₂)ₘ)ₙ-
wherein R is selected from cyclic and acyclic ethylenically unsaturated moieties having from two to ten carbon atoms, and unsubstituted and substituted aryl groups, and mixtures thereof; n is an integer from 2 to 50; and m is an integer from 2 to 5.

4. The process of claim 3, wherein R is an acyclic ethylenically unsaturated moiety corresponding to fumaric acid.

5. The process of claim 3, wherein R is an acyclic ethylenically unsaturated moiety corresponding to maleic acid.

6. The process of claim 3, wherein R is a phenyl group.

7. The process of claim 3, wherein R is a naphthyl group.

8. The process of claim 6, wherein the phenyl group incorporates the carboxyl groups in the ortho configuration.

9. The process of claim 3, wherein R is a mixture of phenyl and -C=C-groups.

10. The process of claim 9, wherein the ratio of phenyl groups to -C=C-groups is from 10:2 to 1:1.

11. The process of claim 9, wherein the ratio of phenyl groups to -C=C-groups is 10:3.

12. The process of claim 3, wherein the polyester oligomer further includes an oxyethylene moiety in addition to the -(CH₂)ₘ- group.

13. The process of claim 1, wherein step (d) is carried out in the presence of an initiator and cross-linking monomer.

14. The process of claim 13, wherein the initiator is a free radical initiator.

15. The process of claim 13, wherein the initiator is an ultraviolet initiator.

16. The process of claim 15, wherein the initiator is selected from benzoin ethyl ether or benzophenone.

17. The process of claim 13, wherein the cross-linking monomer is selected from acrylic acid, methacrylic acid, C₁- to C₄- alkyl acrylates, C₁- to C₄- alkyl methacrylates, styrene, or mixtures thereof.

18. The process of claim 3, wherein the polyester oligomer is derived from the reaction of bis(phthalic anhydride), maleic acid, pentanediol and triethylene glycol in a mole ratio, respectively, of about 0.8 : 0.5 : 1.0 : 0.4.

19. The process of claim 18, wherein the polyester oligomer is cured by ultraviolet radiation in the presence of benzoin ethyl ether, benzophenone, and acrylic acid.

20. The process of claim 3, wherein the polyester oligomer is derived from the reaction of phthalic anhydride, maleic acid, propanediol and triethylene glycol in a mole ratio, respectively, of about 1.0 : 0.3 : 1.0 : 0.3.

21. The process of claim 20, wherein the polyester oligomer is cured by ultraviolet radiation in the presence of benzoin ethyl ether, benzophenone and acrylic acid.

22. The process of claim 1, wherein the liquid crystal is a nematic liquid crystal.

23. The process of claim 1, wherein the liquid crystal is a smectic liquid crystal.

24. The process of claim 1, wherein the liquid crystal is a cholesteric liquid crystal.

25. The process of claim 1, wherein the liquid crystal is a ferroelectric liquid crystal.

26. The process of claim 1, wherein the liquid crystal is metalloorganic mesogen.

27. The process of claim 1, wherein the partial curing step (b) is conducted for a period ranging from 0 to 30 minutes.

28. The process of claim 1, wherein the material is in the form of a film.

29. The process of claim 1, wherein a film 40 µm thick of the material has a percent transmissability of at least 85 percent when measured at a tilt angle of zero according to the test method described in the specification.

30. The process of claim 1, wherein a film 40 µm thick of the material has a percent transmissability of at least 90 percent when measured at a tilt angle of zero according to the test method described in the specification.

31. The process of claim 1, wherein a film 40 µm thick of the material has a percent transmissability of at least 95 percent when measured at a tilt angle of zero according to the test method described in the specification.

32. The process of claim 1, wherein the phase separation in step (c) is thermally induced by cooling the resulting mixture of step (b).

33. The process of claim 1, wherein the curing in steps (b) or (d) is by ultraviolet radiation.

34. The process of claim 1, wherein the curing in steps (b) and (d) is by ultraviolet radiation.

35. A process for making a polymer dispersed liquid crystal material comprising:
(a) mixing a liquid crystal material in a polyester or copolyester oligomer at a temperature range of 70° to 90°C to obtain a clear solution;
(b) partially curing the mixture of step (a) for a period of time ranging from 0 to 30 minutes;
(c) cooling the resulting mixture of step (b) to induce phase separation; and
(d) post-curing the resulting polymer dispersed liquid crystal matrix of step (c),
to complete phase separation.

36. The process of claim 1, wherein after step (a) and before step (b), the resulting mixture of step (a) is coated at a thickness of from 10 µm to 50 µm.

37. The process of claim 36, wherein the resulting mixture of step (a) is coated at a thickness of from 10 µm to 30 µm.
